# FASCICULE DE BREVET EUROPEEN

(11) **EP 3 052 773 B1**
(45) Date de publication et mention de la délivrance du brevet: **06.12.2023**
(21) Numéro de dépôt: 14824039.3
(22) Date de dépôt: 01.10.2014
(51) Int. Cl.: F01K 25/08, F25B 25/00, F25B 27/00

(54) **SYSTÈME THERMODYNAMIQUE DE STOCKAGE/PRODUCTION D'ÉNERGIE ÉLECTRIQUE**
THERMODYNAMISCHES SYSTEM ZUR SPEICHERUNG/ERZEUGUNG ELEKTRISCHER ENERGIE
THERMODYNAMIC SYSTEM FOR STORING/PRODUCING ELECTRICAL ENERGY

(30) Priorité: 03.10.2013 FR 1359614
(43) Date de publication de la demande: 10.08.2016
(73) Titulaire: BOREALES ENERGY, 14200 Herouville Saint Clair (FR)
(72) Inventeur: OUVRY, Patrick, F-14200 Herouville-Saint-Clair (FR)
(74) Mandataire: Cabinet Chaillot
(86) Numéro de dépôt international: PCT/FR2014/052484
(87) Numéro de publication internationale: WO 2015/049461

(56) Documents cités:
- EP-A2- 1 925 475
- WO-A1-99/22188
- WO-A1-2012/075583
- CN-U- 2 089 148
- DE-A1-102004 030 367
- DE-A1-102005 014 959
- GB-A- 2 088 547
- US-A- 4 015 962
- US-A- 4 058 979
- US-A- 4 476 851
- US-A1- 2003 101 728
- US-A1- 2004 088 992
- US-A1- 2004 184 923
- US-A1- 2009 241 546
- US-A1- 2011 100 611
- US-B2- 8 484 986

## Description

L'invention concerne le domaine du stockage d'énergie, et porte plus particulièrement sur un système de stockage/production d'énergie électrique.

Le stockage de l'électricité est devenu un enjeu majeur de stabilité des réseaux électriques à court et moyen terme. Historiquement, les réseaux électriques ont été conçus pour être « descendants » c'est-à-dire pour aller des grosses centrales de production vers les consommateurs. Tout a donc été dimensionné (production et distribution) selon ce schéma unidirectionnel et avec un pilotage des productions pour correspondre au plus près à la demande en électricité.

Depuis quelques années, en raison de la raréfaction des énergies fossiles d'une part et de leurs effets néfastes sur l'environnement d'autre part, de nouveaux moyens de production électrique ont été introduits dans le bouquet énergétique, essentiellement fondés sur les énergies renouvelables.

Mais l'une des caractéristiques de ces nouveaux outils de production mis en œuvre massivement est leur variabilité voire leur intermittence. Certes ces énergies sont prévisibles sur le court et moyen terme mais elles sont irrégulières et, contrairement aux moyens de production historiques, elles ne sont pas pilotables. De plus, étant pour le moment totalement dépourvus de tout moyen de stockage, ces nouveaux outils doivent injecter leur électricité dans le réseau de distribution au gré de leur production, « au fil de l'eau ».

Il résulte de cette variabilité la nécessité de faire appel, pour assurer à tout instant l'équilibre entre l'offre et la demande d'électricité, aux moyens de stockage (essentiellement hydraulique) et à certaines centrales électriques dont la production est très réactive, telles que les centrales à gaz ou à pétrole. Mais cet exercice a ses limites car le stockage hydraulique est arrivé à saturation et les outils de production à flamme ont des temps et des coûts de mise en route non nuls, ce qui conduit les exploitants de centrales à subventionner des opérateurs pour consommer de l'électricité plutôt que de devoir arrêter ces centrales puis de les redémarrer peu de temps après. Cette opération répond à un besoin physique de préservation des réseaux qui, sans cette opération, verraient la tension et/ou la fréquence de leur électricité fluctuer en dehors des tolérances.

C'est pour éviter ce type d'opérations que tous les acteurs de l'énergie se sont lancés à la recherche de nouveaux outils de stockage d'électricité mobilisables rapidement et à grande échelle.

De nombreuses techniques sont envisagées telles que le renforcement du stockage hydraulique, le stockage par air comprimé, par voie électrochimique, par stockage d'hydrogène ou par volant d'inertie.

Cependant, ces différentes techniques sont limitées par un manque de sites d'exploitation (hydraulique) ou par des problèmes de coûts encore trop importants (électrochimie, hydrogène ou volant d'inertie) et encore pour de nombreuses années.

II existe également la voie peu exploitée du stockage d'électricité par voie thermodynamique, domaine dans lequel de nombreuses innovations sont en gestation, par couplage de cycles frigorifiques et organiques de Rankine (Organic Rankine Cycle ou ORC en abrégé).

Cependant, ces nouveaux systèmes et procédés présentent de nombreux inconvénients.

Ainsi, les sources chaude et froide sont constituées de matériaux à température de stockage non constante. Par ailleurs, ces systèmes présentent de nombreux étages d'échangeurs, ce qui nuit aux rendements, trop faibles pour envisager une exploitation industrielle.

Pour améliorer les rendements, il est utile d'utiliser des sources chaudes et sources froides à températures constantes et des échangeurs immergés dans ces sources.

C'est notamment le cas du brevet américain US8484986, portant sur des systèmes de stockage d'électricité par voie thermodynamique, comprenant un circuit d'échange de chaleur entre une source froide et une source chaude à températures constantes, permettant dans un cycle de charge de stocker de l'énergie électrique et dans un cycle de décharge de produire de l'énergie électrique.

Bien que ce brevet américain US8484986 présente de réelles avancées en matière de stockage d'électricité par voie thermodynamique, le système décrit peut être amélioré par l'utilisation d'un matériau de stockage dont le changement de phase s'effectue à une température inférieure à la température ambiante.

La demande internationale WO2012/075583 divulgue un système géothermique comprenant un premier circuit comportant un premier échangeur thermique échangeant de la chaleur avec un espace contrôlé, un second circuit comprenant un second échangeur thermique échangeant de la chaleur avec un puits de chaleur extérieur qui varie de manière saisonnière, un ensemble d'échange de chaleur géothermique conçu pour échanger de la chaleur entre une source géothermique et le fluide dans les premier et second circuits et un dispositif de pompage permettant au premier circuit de fonctionner comme une pompe à chaleur. En outre, la demande de brevet américain US2003/101728 divulgue un système de génération d'énergie électrique comprenant une cuve de stockage d'air liquide, une installation permettant l'évaporation de l'air liquide, une chambre de combustion pour générer un gas brûlé par combustion de l'air évaporé et d'un combustible, une turbine à gaz entraînée par le gaz brûlé, et un générateur de turbine à gaz relié à la turbine à gaz pour générer de l'énergie électrique. Cependant, dans ces deux demandes, les sources chaude et froide sont constituées de matériaux à température de stockage non constante.La présente invention porte sur un système de stockage d'électricité comprenant un circuit frigorifique et un circuit ORC (distincts ou communs) dont les échangeurs sont immergés dans les sources froide et chaude constituées de matériaux à changement de phase (MCP) de températures inférieures ou égales à 0°C, la différence de température entre la source froide et la source chaude étant au moins de 20°C. Dans la présente demande, on désignera par l'expression « fluide de travail » un fluide frigorigène, c'est-à-dire un fluide pur ou un mélange de fluides purs présents en phase liquide, gazeuse ou les deux à la fois en fonction de la température et de la pression de celui-ci. Ce fluide peut être utilisé aussi bien pour un travail positif que pour un travail négatif, et est souvent désigné « fluide organique ». Des exemples non limitatifs de tels fluides peuvent être les hydrofluorocarbures (HFC), les perfluorocarbures (PFC) ou hydrocarbures perfluorés, les hydrocarbures ou composés organiques qui ne font pas partie des catégories précédemment citées, les composés inorganiques comme l'ammoniac ou le CO2, ou des mélanges de ceux-ci.

La présente invention est spécifié dans la revendication 1 et porte sur un système de production/stockage d'énergie électrique, comprenant une enceinte isolée thermiquement renfermant une première circuiterie fermée dans laquelle circule un premier fluide de travail, une source chaude à travers laquelle passe une première branche de la première circuiterie pour un échange de chaleur entre le premier fluide de travail et la source chaude, une source froide à travers laquelle passe une deuxième branche de la première circuiterie pour un échange de chaleur entre le premier fluide de travail et la source froide, les sources chaude et froide étant isolées thermiquement l'une de l'autre, la première circuiterie comprenant en outre des troisième et quatrième branches reliant en série les première et deuxième branches, la troisième branche comprenant un premier élément de mise en circulation du premier fluide de travail liquide et la quatrième branche comprenant un deuxième élément de mise en circulation du premier fluide de travail gazeux, le deuxième élément de mise en circulation étant une turbine réversible, caractérisé par le fait que la source chaude est composée d'un coulis glacé d'eau pure à 0°C, que la source froide est composée d'un coulis glacé de température inférieure ou égale à -40°C et que le système de production/stockage d'énergie électrique comprend en outre une deuxième circuiterie de fluide de travail pour faire circuler un deuxième fluide de travail entre la source chaude et un thermostat thermodynamique constitué d'un système à température constante apte à échanger de la chaleur, le deuxième fluide de travail étant amené à circuler entre ledit thermostat thermodynamique et la source chaude par un détendeur auxiliaire et un compresseur auxiliaire, et étant amené à échanger de la chaleur avec ceux-ci pour maintenir la source chaude à 0°C.

Par le terme « thermostat », on entend un système à une température constante, par exemple l'air extérieur en dehors de l'enceinte du système, une réserve d'eau/un cours d'eau à proximité du système, avec lequel il est facile d'échanger de la chaleur par l'intermédiaire de la deuxième circuiterie pour maintenir la source chaude à 0°C.

La température du thermostat sera généralement légèrement supérieure à celle de la source chaude, mais pourra également, sous certaines conditions climatiques, être égale voire inférieure à la température de la source chaude, sans s'écarter du cadre de la présente invention.

On pourra notamment obtenir un fonctionnement optimal du système selon l'invention avec une température de thermostat proche de zéro degré Celsius.

La deuxième circuiterie de fluide peut être directement reliée à la première circuiterie pour former un seul et même circuit fermé auquel cas les premier et deuxième fluides de travail sont identiques, ou au contraire être fermée et indépendante de la première circuiterie de fluide, sans s'éloigner du cadre de la présente invention.

L'utilisation d'eau, pure ou salée, tant pour la source chaude que pour la source froide, permet d'obtenir des températures constantes pour les deux sources chaude et froide, lors d'un cycle de charge (stockage) et lors d'un cycle de décharge (production).

En outre, le principal élément constitutif de la source chaude et de la source froide étant l'eau, le coût de fabrication du dispositif selon l'invention est réduit par rapport aux dispositifs de l'état antérieur de la technique.

L'eau possède également comme avantage d'avoir un très haut pouvoir de stockage thermique et une grande puissance de transfert thermique.

Enfin, par la température de la source chaude à 0°C, on tire parti des propriétés particulières de changement de phase de l'eau à cette température, permettant d'améliorer encore davantage les échanges thermiques entre le fluide de travail et la source chaude, mais aussi et surtout d'augmenter considérablement la capacité de stockage d'énergie thermique (la chaleur latente de fusion est nettement supérieure à la chaleur sensible).

D'autres matériaux à changement de phase, par exemple des alcools, pourraient être utilisés dans le cadre de la présente invention pour la source froide, sa température étant affectée en conséquence (méthanol : - 90°C, éthanol : -117°C).

Selon la présente invention, le premier élément de mise en circulation de fluide est une pompe réversible.

Ainsi, le dispositif selon l'invention peut être totalement réversible, utilisable aussi bien pour stocker de l'énergie électrique dans les périodes de creux de consommation, que pour produire de l'énergie électrique, dans les périodes de pic de consommation.

On pourrait aussi imaginer, sans s'éloigner du cadre de la présente invention, une pompe et une turbine sur chaque branche, pour un fonctionnement également réversible avec deux appareils différents (compresseur et turbine) branchés en parallèle par branche, sans s'éloigner du cadre de la présente invention.

Selon un autre mode de réalisation, un régénérateur basse température est agencé pour permettre un échange de chaleur entre les branches entrant et sortant de la source froide.

On augmente ainsi le rendement d'échange thermique du système global.

En effet, lors d'un cycle de décharge, le fluide de travail à basse température refroidit, par l'intermédiaire du régénérateur basse température, le fluide de travail qui entre dans la source froide, afin que le moins de glace possible soit consommée dans la source froide.

Un régénérateur haute température peut être agencé entre les branches entrant et sortant du deuxième élément de mise en circulation.

Selon un autre mode de réalisation, un élément de surchauffe apportant une chaleur externe, notamment une chaleur fatale, est disposé sur la première circuiterie de fluide immédiatement en amont de l'entrée du deuxième élément de mise en circulation dans son mode de production d'électricité.

En particulier, la chaleur externe peut provenir de tout dispositif produisant de la chaleur fatale, notamment un moteur thermique, un groupe électrogène, une turbine à gaz, etc., et doit être la plus élevée possible.

Selon une caractéristique particulière de l'invention, la température de l'élément de surchauffe est comprise entre 100°C et 300°C. Ainsi, pour un moteur Diesel la température est idéalement de 160°C et pour une turbine à gaz la température est idéalement de 260 °C.

L'élément de surchauffe permet d'apporter des calories pour surchauffer le fluide de travail gazeux c'est-à-dire pour augmenter son énergie potentielle avant détente, et donc d'augmenter le rendement global du système lors d'une décharge.

Selon un autre mode de réalisation, un ensemble compresseur est disposé sur une cinquième branche de circuiterie en parallèle de la quatrième branche.

Cet ensemble compresseur, qui peut être constitué par un compresseur ou plusieurs compresseurs en parallèle, peut permettre, par exemple en étant alimenté par une source d'électricité renouvelable (éolienne) de charger la source froide en glace sans consommer de courant du réseau électrique.

Un ensemble détendeur peut être disposé sur une sixième branche de circuiterie en parallèle de la troisième branche, lorsque le premier élément de mise en circulation n'est pas une pompe réversible.

Les cinquième et sixième branches peuvent être directement reliées à la première circuiterie, ou les cinquième et sixième branches forment avec une septième branche passant à travers la source chaude et une huitième branche passant à travers la source froide une troisième circuiterie fermée indépendante de la première circuiterie et en parallèle de celle-ci, dans laquelle circule un troisième fluide de travail.

Selon un autre mode de réalisation, le système comprend en outre une source à température intermédiaire entre la température de la source chaude et celle de la source froide, une quatrième circuiterie de fluide transportant un quatrième fluide de travail comprenant une branche passant à travers chacune des sources pour échanger de la chaleur avec celles-ci, la source à température intermédiaire étant branchée sur la quatrième circuiterie en parallèle de la source chaude, par une branche équipée d'un compresseur et une branche équipée d'un détendeur, et en parallèle de la source froide, par une branche équipée d'un compresseur et une branche équipée d'un détendeur.

La présence d'une source à température intermédiaire permet de procéder à une compression dite « étagée », c'est-à-dire de scinder la compression en deux étapes distinctes et de rester au plus près des courbes de saturation du fluide de travail (état liquide saturé, état gazeux saturé). Il en résulte un meilleur rendement global du cycle complet.

Selon une caractéristique particulière, la source à température intermédiaire est constituée par un coulis glacé à une température comprise entre -15 °C et -30 °C, de préférence de -21°C.

La source à température intermédiaire est constituée d'un matériau à changement de phase, en particulier un mélange eutectique d'eau et de chlorure de sodium (sel de mer).

Selon un autre mode de réalisation, le même fluide de travail circule dans la première circuiterie et la quatrième circuiterie qui forment un circuit fermé unique. On n'a ainsi qu'un seul échangeur par source.

Selon un autre mode de réalisation, la première circuiterie et la quatrième circuiterie sont indépendantes. On a ainsi la possibilité d'utiliser un fluide de travail plus approprié pour la turbine (par exemple du CO₂) et un autre fluide de travail pour la quatrième circuiterie, ce qui permet d'augmenter le rendement global, mais impose d'avoir deux échangeurs par source.

Selon un autre mode de réalisation, la source froide est constituée par un mélange eutectique d'eau et de chlorure de calcium.

Ainsi, le système selon la présente invention permet, avec un même dispositif, un stockage et une production d'énergie électrique à bas coût. En outre, le système est réactif.

Bien que cela ne soit pas précisé, le système est relié à un réseau électrique local ou interconnecté, pour stocker de l'énergie dans une phase de charge, et en produire dans une phase de décharge.

Avantageusement, l'enceinte du système peut par exemple être un conteneur, être disposée près d'une source de chaleur fatale et d'un thermostat, et contenir la ou les circuiteries et les différentes sources, l'enceinte étant reliée à un réseau électrique qui peut être un réseau local ou interconnecté.

Le système selon l'invention est alors facilement déplaçable et mobilisable.

Le système peut alors être utilisé comme source d'électricité d'appoint, stockant de l'énergie dans les périodes de creux de consommation, et produisant de l'électricité dans les périodes de pic de consommation.

Un autre avantage du système de l'invention est que, contrairement aux systèmes électrochimiques, il n'y a pas de perte de rendement au cours du temps du fait de la détérioration chimique des composants, grâce à l'utilisation d'eau pour les sources.

Enfin, toujours en raison de l'utilisation de l'eau, le système n'est pas polluant, et son démantèlement ne nécessite aucune transformation coûteuse de ses matériaux constitutifs.

Selon un mode de réalisation, la première circuiterie et la deuxième circuiterie sont reliées en une unique circuiterie fermée, les premier et deuxième fluides de travail constituant un seul et même fluide de travail pour l'ensemble constitué par les première et deuxième circuiteries.

Selon un mode de réalisation, au moins un compresseur de l'ensemble compresseur est équipé d'un rotor muni de pâles et est entraîné directement par l'énergie mécanique du vent, ou est équipé d'un rotor entraîné par un circuit pneumatique ou hydraulique actionné par une éolienne de pompage, le rotor étant alors entraîné indirectement par l'énergie mécanique du vent.

L'invention a également pour objet un procédé de production/stockage d'électricité utilisant le système tel que décrit ci-dessus, pour produire de l'électricité à partir de la glace de la source froide et stocker de l'électricité sous forme de glace dans la source froide.

Le procédé de production d'électricité consiste à actionner les éléments de mise en circulation du fluide de travail du système décrit ci-dessus pour que le fluide de travail s'évapore dans l'échangeur immergé dans la source chaude (provoquant la formation de cristaux de glace dans la source chaude), passe à travers le deuxième élément de mise en circulation de fluide de travail où il se détend pour produire de l'électricité, et se condense dans l'échangeur immergé dans la source froide, faisant fondre des cristaux de glace dans la source froide.

Le procédé de stockage d'électricité consiste à actionner les éléments de mise en circulation du fluide de travail du système décrit ci-dessus pour que le deuxième élément de mise en circulation de fluide de travail fonctionne en compresseur et fasse évaporer le fluide de travail dans l'échangeur immergé dans la source froide (provoquant la formation de cristaux dans la source froide), le fluide de travail se condensant ensuite dans l'échangeur immergé dans la source chaude (faisant fondre des cristaux de glace dans la source chaude), avant d'être détendu par le premier élément de mise en circulation de fluide de travail fonctionnant en tant que détendeur.

Pour mieux illustrer l'objet de la présente invention, on va maintenant en décrire ci-après un mode de réalisation, à titre illustratif et non limitatif, en liaison avec les dessins annexés.

Sur ces dessins :
- la Figure 1 est un schéma d'un système de stockage/production d'énergie électrique selon un premier mode de réalisation de la présente invention ;
- la Figure 2 est un schéma d'un système de stockage/production d'énergie électrique selon un deuxième mode de réalisation de la présente invention ;
- la Figure 3 est un schéma d'un système de stockage/production d'énergie électrique selon un troisième mode de réalisation de la présente invention ;
- la Figure 4 est un schéma d'un système de stockage/production d'énergie électrique selon un quatrième mode de réalisation de la présente invention ;
- la Figure 5 est un schéma d'un système de stockage/production d'énergie électrique selon un cinquième mode de réalisation de la présente invention ; et
- la Figure 6 est un schéma d'un système stockage/production d'énergie électrique selon sixième mode de réalisation de la présente invention.

Dans la description détaillée suivante, les mêmes chiffres de référence désignent les mêmes éléments structuraux.

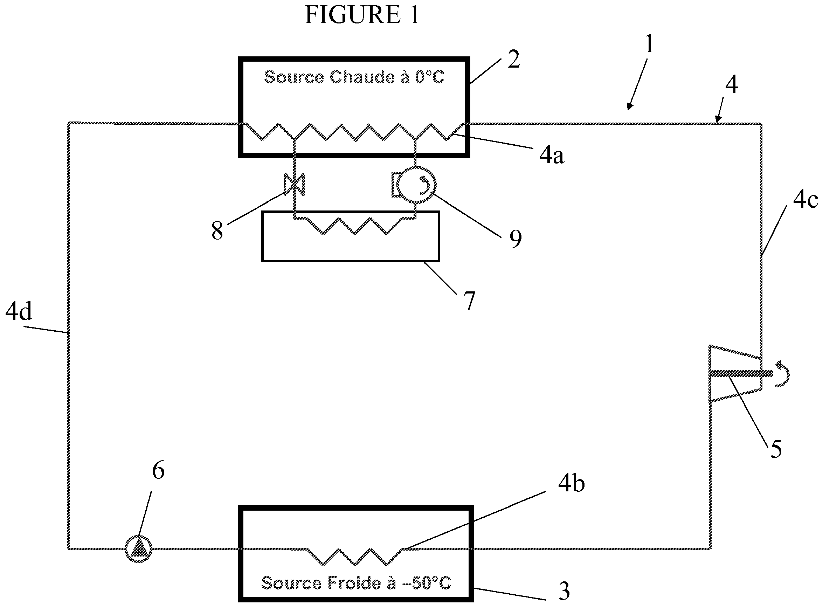

Si l'on se réfère à la Figure 1, on peut voir que l'on y a représenté un système 1 de stockage/production d'énergie électrique selon un premier mode de réalisation de l'invention.

Le système 1 comprend une source chaude 2, une source froide 3, toutes deux isolées thermiquement (et notamment l'une de l'autre) un circuit 4 comprenant une partie 4a d'échange de chaleur avec la source chaude 2 et une partie 4b d'échange de chaleur avec la source froide 3.

La source chaude 2 est composée d'un coulis glacé d'eau pure à 0°C, la source froide 3 étant quant à elle composée d'un coulis glacé à -50°C, constitué d'un mélange eutectique d'eau et de chlorure de calcium.

Une turbine réversible 5 est disposée sur la branche 4c du circuit 4 reliant la source chaude 2 à la source froide 3, et une pompe réversible 6 est disposée sur l'autre branche 4d du circuit 4 reliant la source froide 3 à la source chaude 2.

La turbine 5 et la pompe 6 étant réversibles, le système 1 peut être utilisé pour stocker de l'énergie électrique (charge) ou produire de l'énergie électrique (décharge).

Le système 1 comprend en outre un élément, jouant le rôle d'un thermostat thermodynamique 7, à une température généralement supérieure à celle de la source chaude 2, pour échanger avec celle-ci de la chaleur, par l'intermédiaire d'un détendeur auxiliaire 8 et d'un compresseur auxiliaire 9.

Le thermostat thermodynamique 7 peut également être à une température inférieure ou égale à celle de la source chaude 2, sans s'éloigner du cadre de la présente invention.

Le fluide de travail utilisé dans le circuit 4, ainsi que dans le circuit reliant la source chaude 2 et le thermostat thermodynamique 7 est un fluide frigorigène, par exemple du R410A ou du CO₂, sans que ces deux exemples soient limitatifs.

Bien qu'elle ne soit pas représentée pour ne pas alourdir le dessin, le système 1 comprend en outre une enceinte étanche calorifugée renfermant le circuit 4, la source chaude 2, la source froide 3, la turbine 5, la pompe 6. Le compresseur auxiliaire 9 et le détendeur auxiliaire 8 peuvent être à l'intérieur de l'enceinte mais sont, de préférence, à l'extérieur, reliés à celle-ci de manière étanche. Le thermostat thermodynamique 7 est un échangeur immergé dans un fluide à température sensiblement constante, par exemple l'air extérieur ou de l'eau (cours d'eau ou masse d'eau) ou un autre fluide à une température supérieure à celle de la source chaude 2.

L'enceinte peut par exemple être constituée par un conteneur étanche, l'enceinte comprenant des moyens pour relier le système 1 à un réseau électrique local ou interconnecté afin que le système 1 puisse échanger de l'énergie électrique avec l'extérieur.

Le système 1 a deux modes de fonctionnement, la turbine 5 et la pompe 6 ayant un fonctionnement réversible.

Dans un premier mode de fonctionnement (charge ou stockage), la turbine 5 fonctionnant en compresseur fait évaporer le fluide de travail dans l'échangeur immergé dans la source froide 3 (provoquant la formation de cristaux dans la source froide 3), le fluide de travail se condensant ensuite dans l'échangeur immergé dans la source chaude 2 (faisant fondre des cristaux de glace dans la source chaude), avant d'être détendu par la pompe 6 fonctionnant en tant que détendeur.

Dans un deuxième mode de fonctionnement (décharge ou production), le fluide de travail s'évapore dans l'échangeur immergé dans la source chaude 2 (provoquant la formation de cristaux de glace dans la source chaude 2), passe à travers la turbine 5 où il se détend pour produire de l'électricité, et se condense dans l'échangeur immergé dans la source froide 3, faisant fondre des cristaux de glace dans la source froide 3.

Ainsi, dans le système 1 selon l'invention, le stockage d'électricité se traduit par la formation de glace dans la source froide 3 et la production d'électricité se traduit par la consommation de glace dans la source froide 3, la quantité de glace dans la source chaude 2 étant régulée par échange de chaleur avec le thermostat thermodynamique 7.

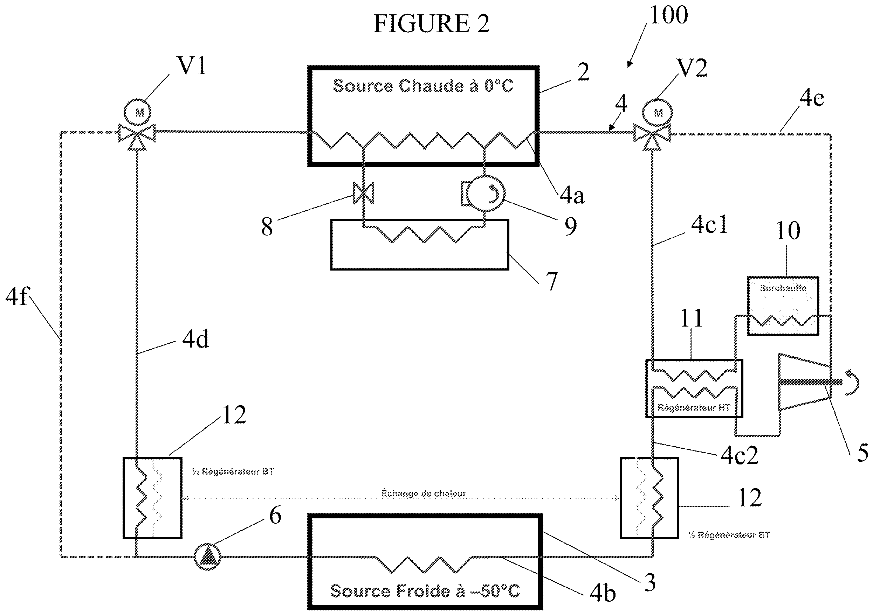

Si l'on se réfère maintenant à la Figure 2, on peut voir qu'il y est représenté un système 100 selon un autre mode de réalisation. Les éléments communs avec le mode de réalisation de la Figure 1 ne seront pas redécrits ici, seuls les éléments qui diffèrent entre les deux modes de réalisation étant décrits.

Dans ce deuxième mode de réalisation, la branche 4c du premier mode de réalisation est divisée en deux sous-branches 4cl et 4c2 séparées par un régénérateur haute température 11 et des branches 4e et 4f sont ajoutées, respectivement en parallèle des branches 4cl, 4d du circuit 4.

En outre, un élément de surchauffe 10, positionné en amont de la turbine 5, sert à chauffer le fluide de travail avant sa détente dans la turbine 5, dans le mode de fonctionnement de décharge du système 100, afin d'augmenter le rendement du système 100. L'élément de surchauffe 10 chauffe le fluide de travail à partir d'une source de chaleur fatale de type moteur Diesel ou groupe électrogène (non représentée), la température de l'élément de surchauffe 10 étant d'environ 160°C (moteur Diesel) ou 260°C (turbine à gaz).

En outre le régénérateur haute température 11 sur la branche 4cl du circuit 4 et un régénérateur basse température 12 (représenté en deux parties distinctes pour ne pas alourdir la lecture de la Figure) , disposé sur les branches 4c2 et 4d du circuit 4, permettent également d'augmenter le rendement du système 100 en améliorant l'échange thermique du fluide de travail.

Les vannes trois voies VI et V2 permettent, comme pour le système 1, un fonctionnement réversible du système 100 en charge ou en décharge.

Dans le mode de charge, le fluide de travail circule dans les branches 4e, 4a, 4f, 4b et 4c2, la turbine 5 fonctionnant en compresseur, le fonctionnement étant analogue à celui décrit pour le premier mode de réalisation.

Dans le mode de décharge, le fluide de travail circule dans la branche 4cl, dans le régénérateur haute température 11, dans l'élément de surchauffe 10, dans la turbine 5, puis par l'intermédiaire du régénérateur haute température 11 dans la branche 4c2, le régénérateur basse température 12, la branche 4b, la pompe 6, le régénérateur basse température 12, les branches 4d et 4a, le fonctionnement étant analogue à celui décrit pour le premier mode de réalisation.

Ainsi, le fluide de travail ne passe dans l'élément de surchauffe 10 que dans le fonctionnement de décharge.

Il est bien entendu que dans ce mode de réalisation, les régénérateurs 11, 12 améliorent le rendement, mais sont facultatifs, et un système analogue au système 100, dans lequel les régénérateurs 11, 12 seraient absents entrerait également dans la portée de la présente invention.

Le régénérateur basse température 12 sert à refroidir le fluide de travail gazeux entrant dans la source froide 3 lors de la phase de décharge, en utilisant en régime permanent le fluide de travail liquide froid sortant de la source froide 3 pour refroidir le fluide de travail gazeux y entrant, afin de consommer le moins de cristaux de glace possible dans la source froide 3.

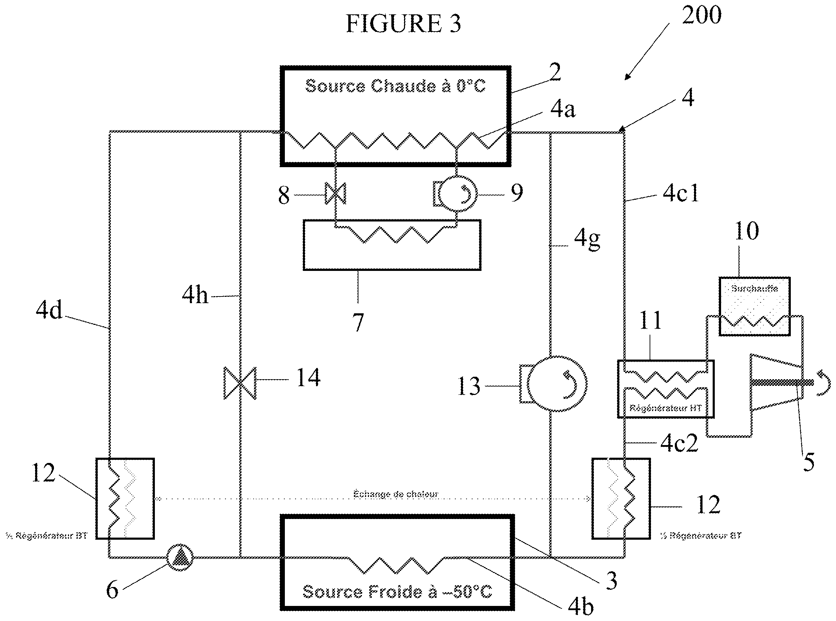

Si l'on se réfère maintenant à la Figure 3, on peut voir que l'on y a représenté un système 200 selon un troisième mode de réalisation.

Ce système est similaire au système 1 de la Figure 1, la branche 4c de la Figure 1 étant, comme pour le deuxième mode de réalisation, divisée en deux sous-branches 4cl et 4c2 et reliées à la turbine 5 par un régénérateur haute température 11.

Comme pour le deuxième mode de réalisation, un élément de surchauffe 10 est relié à la turbine 5.

En outre, une branche 4g, sur laquelle est monté un compresseur 13 est prévue en parallèle des branches 4cl et 4c2 et une branche 4h, sur laquelle est monté un détendeur 14, est prévue en parallèle de la branche 4d.

Le fonctionnement du système 200 de la Figure 3 est globalement identique au fonctionnement du système 100 de la Figure 2.

La branche 4g joue le même rôle que la branche 4e dans la Figure 2, le compresseur 13 servant à recharger en cristaux de glace la source froide 3 lors d'un cycle de charge.

Le compresseur 13 peut être un unique compresseur, mais peut également être un ensemble de compresseurs en parallèle.

Le compresseur peut notamment être mu par une source d'énergie renouvelable telle qu'une éolienne (ou plusieurs éoliennes en parallèle) qui utilise une énergie renouvelable (le vent) pour recharger la source froide 3 sans avoir besoin de prendre de l'électricité du réseau comme dans le système 100 de la Figure 2. Ainsi, l'énergie mécanique du vent peut être directement transformée en glace sans passer par le vecteur électrique, ce qui évite des pertes de conversion.

La branche 4h sert alors, avec le détendeur 14, à faire circuler le fluide de travail lors du cycle de charge, sur les branches 4g, 4b, 4h et 4a. Il est à noter toutefois que cette branche 4g portant le détendeur 14 peut être omise si la pompe 6 est réversible, comme dans les modes de réalisation précédents.

Le fonctionnement en décharge est le même qu'à la Figure 2, le fluide de travail empruntant la branche 4cl, le régénérateur haute température 11, la turbine 5, la branche 4c2, le régénérateur basse température 12, la branche 4b, le régénérateur basse température 12, les branches 4d et 4a, et ne sera pas décrit plus en détail ici.

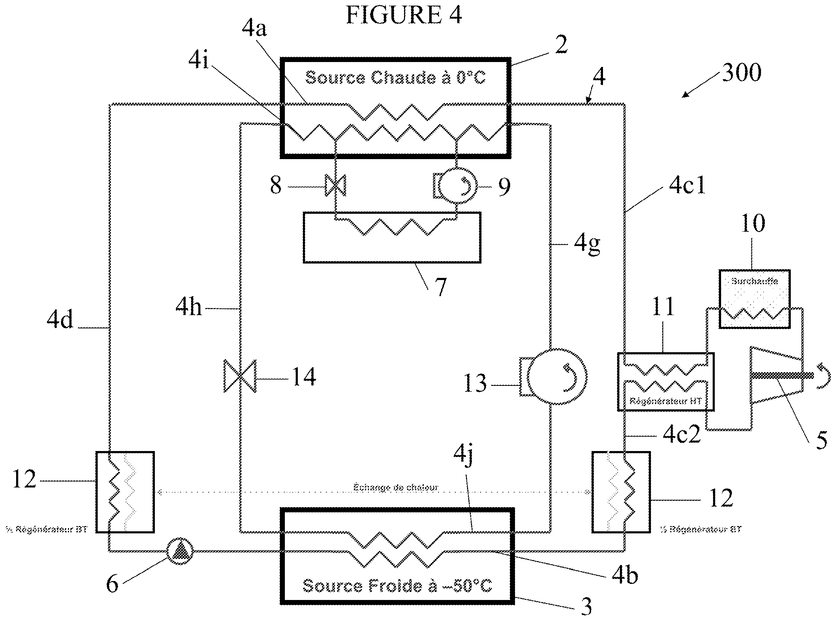

La Figure 4 présente un quatrième mode de réalisation d'un système 300 selon l'invention.

Le système 300 comporte deux branches 4g et 4h, respectivement en parallèle des branches 4cl, 4c2 et 4d, et deux branches 4i, 4j reliant les branches 4g et 4h en série, les deux branches 4i, 4j passant à travers les sources chaude 2 et froide 3, de la même façon que les branches 4a et 4b.

Chaque branche 4g, 4h porte, comme dans le précédent mode de réalisation, un compresseur 13, respectivement un détendeur 14.

On a donc deux circuits en parallèle, un pour le cycle de charge (branches 4i, 4g, 4j et 4h) , l'autre pour le cycle de décharge (4a, 4cl, 4c2, 4b et 4d), le fonctionnement étant sinon analogue à celui du précédent mode de réalisation et donc non redécrit ici.

Il est à noter que dans ce mode de réalisation, la pompe 6 peut être réversible, mais ne l'est pas nécessairement. Le détendeur 14 est dans ce mode de réalisation nécessaire, contrairement au mode de réalisation précédent, car dans ce mode de réalisation, les circuits de charge et de décharge sont indépendants.

En outre, le circuit thermostat thermodynamique 7, détendeur auxiliaire 8 et compresseur auxiliaire 9 a été relié à titre illustratif et non limitatif au circuit 4i, 4g, 4j et 4h dans ce mode de réalisation à titre d'exemple, mais il est bien entendu qu'il aurait aussi pu être relié au circuit 4a, 4cl, 4c2, 4b et 4d sans s'éloigner de la portée de la présente invention. Ce circuit thermostat thermodynamique 7, détendeur auxiliaire 8 et compresseur auxiliaire 9 pourrait aussi, comme dans tous les autres modes de réalisation, être un circuit indépendant des autres circuits, puisque fonctionnellement son rôle se limite à échanger de la chaleur avec la source chaude 2, sans s'éloigner de la portée de la présente invention.

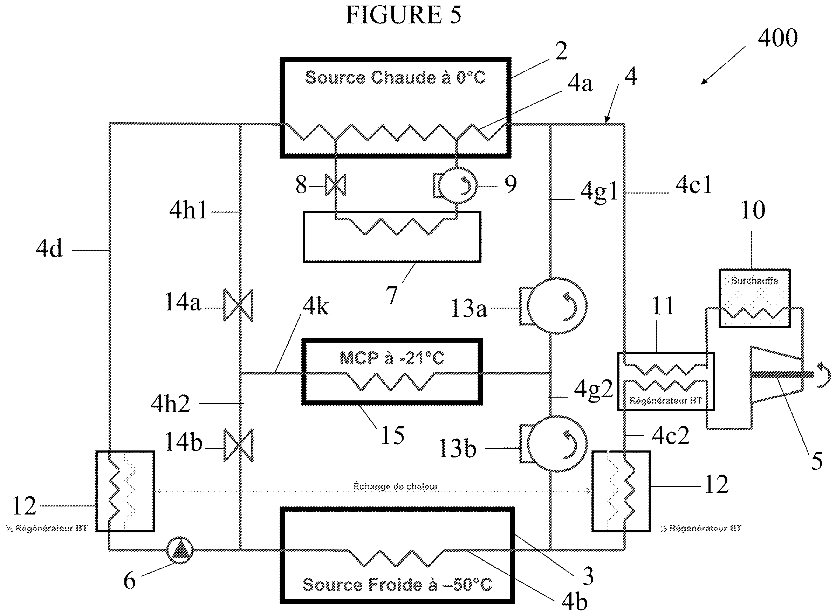

Le cinquième mode de réalisation du système 400 de la Figure 5 est identique au mode de réalisation 300 de la Figure 3, et les mêmes éléments ne seront pas décrits, seules les différences seront décrites.

Les branches 4g et 4h de la Figure 3 sont divisées dans ce mode de réalisation de la Figure 5 en sous-branches 4gl, 4g2 et 4hl, 4h2 respectivement.

Une branche 4k, en parallèle des branches 4a et 4b, traverse une source 15 à température intermédiaire de - 21°C. Des compresseurs 13a, 13b sur les branches 4gl et 4g2, et des détendeurs 14a, 14b sur les branches 4hl et 4h2, permettent des échanges de fluide de travail entre la source à température intermédiaire 15 et la source chaude 2 d'une part, et la source froide 3 d'autre part.

Comme pour le mode de réalisation de la Figure 3, les compresseurs 13a, 13b peuvent représenter un unique élément ou un groupe d'éléments identiques en parallèle.

La source à température intermédiaire 15 est à base de MCP, et permet d'optimiser les échanges de chaleur lors du cycle de charge, le cycle de décharge restant inchangé. Dans ce mode de réalisation, la pompe 6 peut ne pas être réversible.

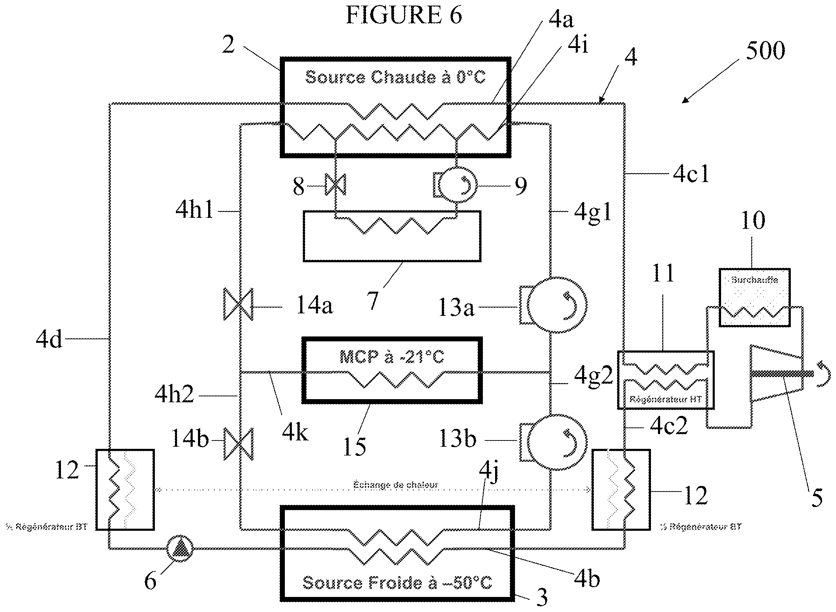

La Figure 6 représente un sixième mode de réalisation d'un système 500 selon l'invention.

Le système 500 est une combinaison des modes de réalisation des Figures 4 et 5, le circuit de charge étant en parallèle du circuit de décharge comme pour le système 300 de la Figure 4, et le circuit de charge ayant une source de température intermédiaire 15 comme dans le système 400 de la Figure 5.

Le mode de fonctionnement de ce système se déduisant des deux précédents modes de réalisation ne sera pas décrit plus en détail ici.

Dans les modes de réalisation des Figures 4 et 6, dans lesquels les circuits sont en parallèle, le fluide de travail dans les deux circuits peut être identique mais deux fluides de travail différents peuvent également circuler dans les deux circuits, sans s'éloigner du cadre de la présente invention.

La capacité de stockage électrique de ce système se situe entre 11 à 15 kWh / m³ de glace (dépend de la température de surchauffe).

A titre d'exemple, avec un système selon l'invention monté dans une enceinte étanche prenant la forme d'un conteneur, et avec un volume global de glace de 50m3 (source chaude + source froide), la quantité d'énergie électrique qui peut être déstockée est d'environ 500 kWh, soit 0,5 MWh.

L'enceinte en conteneur permet de rendre le système selon l'invention facilement transportable et déployable.

Par ailleurs, son caractère modulaire permet de dimensionner le stockage aux besoins locaux par adjonction de plusieurs « briques » (modules) élémentaires.

## Revendications

1. - Système de production/stockage d'énergie électrique (1 ; 100 ; 200 ; 300 ; 400 ; 500), où le stockage d'électricité se traduit par la formation de glace dans une source froide (3) et la production d'électricité se traduit par la consommation de glace dans la source froide (3), comprenant une enceinte isolée thermiquement renfermant une première circuiterie fermée dans laquelle circule un premier fluide de travail, une source chaude (2) à travers laquelle passe une première branche (4a) de la première circuiterie pour un échange de chaleur entre le premier fluide de travail et la source chaude (2), une source froide (3) à travers laquelle passe une deuxième branche (4b) de la première circuiterie pour un échange de chaleur entre le premier fluide de travail et la source froide (3), les sources chaude (2) et froide (3) étant isolées thermiquement l'une de l'autre, la première circuiterie comprenant en outre des troisième (4d) et quatrième (4c) branches reliant en série les première (4a) et deuxième (4b) branches, la troisième branche (4d) comprenant un premier élément (6) de mise en circulation du premier fluide de travail liquide et la quatrième branche (4c) comprenant un deuxième élément (5) de mise en circulation du premier fluide de travail gazeux, le deuxième élément (5) de mise en circulation étant une turbine réversible, la source froide (3) est composée d'un coulis glacé de température inférieure ou égale à -40 °C, **caractérisé par le fait que** le premier élément (6) de mise en circulation de fluide est une pompe réversible, que la source chaude (2) est composée d'un coulis glacé d'eau pure à 0°C et que le système de production/stockage d'énergie électrique (1 ; 100 ; 200 ; 300 ; 400 ; 500) comprend en outre une deuxième circuiterie de fluide de travail pour faire circuler un deuxième fluide de travail entre la source chaude (2) et un thermostat thermodynamique (7) constitué d'un système à température constante apte à échanger de la chaleur, le deuxième fluide de travail étant amené à circuler entre ledit thermostat thermodynamique (7) et la source chaude (2) par un détendeur auxiliaire (8) et un compresseur auxiliaire (9), et étant amené à échanger de la chaleur avec ceux-ci pour maintenir la source chaude à 0°C.

2. - Système selon la revendication 1, **caractérisé par le fait qu'**un régénérateur basse température (12) est agencé pour permettre un échange de chaleur entre les branches entrant et sortant de la source froide (3).

3. - Système selon l'une des revendications 1 à 2, **caractérisé par le fait qu'**un régénérateur haute température (11) est agencé entre les branches entrant et sortant du deuxième élément (5) de mise en circulation.

4. - Système selon l'une des revendications 1 à 3, **caractérisé par le fait qu'**un élément de surchauffe (10) apportant une chaleur externe est disposé sur la première circuiterie de fluide immédiatement en amont de l'entrée du deuxième élément (5) de mise en circulation dans son mode de production d'électricité.

5. - Système selon l'une des revendications 1 à 4, **caractérisé par le fait qu'**un ensemble compresseur (13) est disposé sur une cinquième branche (4g) de circuiterie en parallèle de la quatrième branche (4cl ; 4c2).

6. - Système selon l'une des revendications 1 à 5, **caractérisé par le fait qu'**un ensemble détendeur (14) est disposé sur une sixième branche (4h) de circuiterie en parallèle de la troisième branche (4d).

7. - Système selon la revendication 6 prise en dépendance de la revendication 5, **caractérisé par le fait que** les cinquième (4g) et sixième (4h) branches sont directement reliées à la première circuiterie.

8. - Système selon la revendication 6 prise en dépendance de la revendication 5, **caractérisé par le fait que** les cinquième (4g) et sixième (4h) branches forment avec une septième branche (4i) passant à travers la source chaude (2) et une huitième branche (4j) passant à travers la source froide (3) une troisième circuiterie fermée indépendante de la première circuiterie et en parallèle de celle-ci, dans laquelle circule un troisième fluide de travail.

9. - Système selon l'une des revendications 1 à 4, **caractérisé par le fait qu'**il comprend en outre une source à température intermédiaire (15) entre la température de la source chaude (2) et celle de la source froide (3), une quatrième circuiterie de fluide transportant un quatrième fluide de travail comprenant une branche passant à travers chacune des sources pour échanger de la chaleur avec celles-ci, la source à température intermédiaire (15) étant branchée sur la quatrième circuiterie en parallèle de la source chaude (2), par une branche (4gl) équipée d'un compresseur (13a) et une branche (4hl) équipée d'un détendeur (14a), et en parallèle de la source froide (3), par une branche (4g2) équipée d'un compresseur (13b) et une branche (4h2) équipée d'un détendeur (14b).

10. - Système selon la revendication 9, **caractérisé par le fait que** la source à température intermédiaire (15) est constituée par un coulis glacé à une température comprise entre -15 °C et -30 °C, de préférence de -21°C.

11. - Système selon l'une des revendications 9 et 10, Il; **caractérisé par le fait que** le même fluide de travail circule dans la première circuiterie et la quatrième circuiterie qui forment un circuit fermé unique.

12. - Système selon l'une des revendications 9 et 10, **caractérisé par le fait que** la première circuiterie et la quatrième circuiterie sont indépendantes.

13. - Système selon l'une des revendications 1 à 12, **caractérisé par le fait que** la source froide (3) est constituée par un mélange eutectique d'eau et de chlorure de calcium.

14. - Système selon l'une des revendications 1 à 13, **caractérisé par le fait que** la première circuiterie et la deuxième circuiterie sont reliées en une unique circuiterie fermée, les premier et deuxième fluides de travail constituant un seul et même fluide de travail pour l'ensemble constitué par les première et deuxième circuiteries.

15. - Système selon l'une des revendications 5 à 14, **caractérisé par le fait qu'**au moins un compresseur de ensemble compresseur (13) est équipé d'un rotor muni de pâles et est entraîné directement par l'énergie mécanique du vent, ou est équipé d'un rotor entraîné par un circuit pneumatique ou hydraulique actionné par une éolienne de pompage, le rotor étant alors entraîné indirectement par l'énergie mécanique du vent.

## Patentansprüche

1. - System zur Erzeugung/Speicherung von elektrischer Energie (1; 100; 200; 300; 400; 500), wobei die Speicherung von Strom in einer Bildung von Eis in einer Kältequelle (3) resultiert und die Erzeugung von Strom in einem Verbrauch von Eis in der Kältequelle (3) resultiert, umfassend
ein wärmeisoliertes Gehäuse, das einen ersten geschlossenen Kreislauf umschließt, in der ein erstes Betriebsfluid zirkuliert, eine Wärmequelle (2), durch die ein erster Zweig (4a) des ersten Kreislaufs für einen Wärmeaustausch zwischen dem ersten Betriebsfluid und der Wärmequelle (2) verläuft, eine Kältequelle (3), durch die ein zweiter Zweig (4b) des ersten Kreislaufs für einen Wärmeaustausch zwischen dem ersten Betriebsfluid und der Kältequelle (3) verläuft, wobei die Wärme- (2) und Kältequelle (3) thermisch voneinander isoliert sind, der erste Kreislauf ferner umfassend einen dritten (4d) und einen vierten (4c) Zweig, die den ersten (4a) und den zweiten (4b) Zweig in Reihe verbinden, der dritte Zweig (4d) umfassend ein erstes Element (6) zum Zirkulieren des ersten flüssigen Betriebsfluids, und der vierte Zweig (4c) umfassend ein zweites Element (5) zum Zirkulieren des ersten gasförmigen Betriebsfluids, wobei das zweite Element (5) zum Zirkulieren eine umkehrbare Turbine ist, wobei die Kältequelle (3) aus einer eisigen Masse mit einer Temperatur niedriger als oder gleich wie -40 °C besteht, **dadurch gekennzeichnet, dass** das erste Fluidzirkulierenelement (6) eine Umkehrpumpe ist, dass die Wärmequelle (2) aus einer eisigen Masse aus reinem Wasser bei 0 °C besteht, und dass das System zur Erzeugung/Speicherung elektrischer Energie (1; 100; 200; 300; 400; 500) ferner einen zweiten Betriebsfluidkreislauf zum Zirkulieren eines zweiten Betriebsfluids zwischen der Wärmequelle (2) und einem thermodynamischen Thermostat (7), der aus einem System mit konstanter Temperatur besteht, das für einen Wärmeaustausch geeignet ist, wobei das zweite Betriebsfluid dazu gebracht, zwischen dem thermodynamischen Thermostat (7) und der Wärmequelle (2) durch ein Hilfsdruckminderer (8) und einen Hilfskompressor (9) zu zirkulieren und dazu gebracht, Wärme mit diesen auszutauschen, um die Wärmequelle auf 0°C zu halten.

2. - System nach Anspruch 1, **dadurch gekennzeichnet, dass** ein Niedertemperaturregenerator (12) angeordnet ist, um einen Wärmeaustausch zwischen dem in die Kältequelle (3) eintretenden Zweig und dem aus der Kältequelle (3) austretenden Zweig zu ermöglichen.

3. - System nach einem der Ansprüche 1 bis 2, **dadurch gekennzeichnet, dass** ein Hochtemperaturregenerator (11) zwischen dem in das zweite Zirkulierenelement (5) eintretenden Zweig und dem aus dem zweiten Zirkulierenelement (5) austretenden Zweig angeordnet ist.

4. - System nach einem der Ansprüche 1 bis 3, **dadurch gekennzeichnet, dass** ein Überhitzungselement (10), das externe Wärme beiträgt, an dem ersten Fluidkreislauf unmittelbar stromaufwärts von dem Eingang des zweiten Zirkulierenelements (5) in dessen Stromerzeugungsmodus angeordnet ist.

5. - System nach einem der Ansprüche 1 bis 4, **dadurch gekennzeichnet, dass** eine Kompressoranordnung (13) an einem fünften Kreislaufzweig (4g) parallel zu dem vierten Zweig (4c1; 4c2) angeordnet ist.

6. - System nach einem der Ansprüche 1 bis 5, **dadurch gekennzeichnet, dass** eine Druckmindereranordnung (14) an einem sechsten Kreislaufzweig (4h) parallel zu dem dritten Zweig (4d) angeordnet ist.

7. - System nach Anspruch 6, wenn abhängig von Anspruch 5, **dadurch gekennzeichnet, dass** der fünfte (4g) und der sechste (4h) Zweig direkt mit dem ersten Kreislauf verbunden sind.

8. - System nach Anspruch 6, wenn abhängig von Anspruch 5, **dadurch gekennzeichnet, dass** der fünfte (4g) und der sechste (4h) Zweig zusammen mit einem siebten Zweig (4i), der durch die Wärmequelle (2) verläuft, und einem achten Zweig (4j), der durch die Kältequelle (3) verläuft, einen dritten geschlossenen Kreislauf bilden, der unabhängig von dem ersten Kreislauf und parallel dazu verläuft und in dem ein drittes Betriebsfluid zirkuliert.

9. - System nach einem der Ansprüche 1 bis 4, **dadurch gekennzeichnet, dass** es ferner eine Zwischentemperaturquelle (15) zwischen der Temperatur der Wärmequelle (2) und der Temperatur der Kältequelle (3) umfasst, einen vierten Fluidkreislauf, der ein viertes Betriebsfluid transportiert, umfassend einen Zweig, der durch jede der Quellen verläuft, um damit Wärme auszutauschen, wobei die Zwischentemperaturquelle (15) an den vierten Kreislauf parallel zu der Wärmequelle (2) über einen Zweig (4gl), der mit einem Kompressor (13a) ausgestattet ist, und einen Zweig (4hl), der mit einem Druckminderer (14a) ausgestattet ist, und parallel zu der Kältequelle (3) über einen Zweig (4g2), der mit einem Kompressor (13b) ausgestattet ist, und einen Zweig (4h2), der mit einem Druckminderer (14b) ausgestattet ist, verbunden ist.

10. - System nach Anspruch 9, **dadurch gekennzeichnet, dass** die Zwischentemperaturquelle (15) aus einer eisigen Masse besteht, das bei einer Temperatur zwischen -15 °C und -30 °C, vorzugsweise bei -21 °C, gefroren ist.

11. - System nach einem der Ansprüche 9 oder 10,.**dadurch gekennzeichnet, dass** das gleiche Betriebsfluid durch den ersten Kreislauf und den vierten Kreislauf zirkuliert, die einen einzigen geschlossenen Kreislauf bilden.

12. - System nach einem der Ansprüche 9 oder 10, **dadurch gekennzeichnet, dass** der erste Kreislauf und der vierte Kreislauf unabhängig sind.

13. - System nach einem der Ansprüche 1 bis 12, **dadurch gekennzeichnet, dass** die Kältequelle (3) aus einer eutektischen Mischung aus Wasser und Calciumchlorid besteht.

14. - System nach einem der Ansprüche 1 bis 13, **dadurch gekennzeichnet, dass** der erste Kreislauf und der zweite Kreislauf zu einem einzigen geschlossenen Kreislauf verbunden sind, wobei das erste und das zweite Betriebsfluid ein einziges Betriebsfluid für die Einheit bilden, die aus dem ersten und dem zweiten Kreislauf besteht.

15. - System nach einem der Ansprüche 5 bis 14, **dadurch gekennzeichnet, dass** mindestens ein Kompressor der Kompressoranordnung (13) mit einem Rotor ausgestattet ist, der mit Rotorblättern versehen ist und direkt durch die mechanische Energie des Winds angetrieben wird, oder mit einem Rotor ausgestattet ist, der durch einen pneumatischen oder hydraulischen Kreislauf angetrieben wird, der durch eine Windsturbine zum Pumpen angetrieben wird, wobei der Rotor dann indirekt durch die mechanische Energie des Windes angetrieben wird.

## Claims

1. - A system for producing/storing electrical energy (1; 100; 200; 300; 400; 500), wherein electricity storage results in ice formation in a cold source (3) and electricity production results in ice consumption in the cold source (3), comprising a thermally insulated chamber containing a first closed circuitry in which circulates a first working fluid, a hot source (2) through which a first leg (4a) of the first circuitry passes for a heat exchange between the first working fluid and the hot source (2), a cold source (3) through which a second leg (4b) of the first circuitry passes for a heat exchange between the first working fluid and the cold source (3), the hot (2) and cold (3) sources being thermally insulated from each other, the first circuitry further comprising third (4d) and fourth (4c) legs connecting in series the first (4a) and second (4b) legs, the third leg (4d) comprising a first member (6) for circulating the first liquid working fluid and the fourth leg (4c) comprising a second member (5) for circulating the first gas working fluid, the second circulating member (5) being a reversible turbine, the cold source (3) being composed of an ice slurry with a temperature lower than or equal to -40°C, **characterized by** the fact that the first fluid circulating member (6) is a reversible pump, that the hot source (2) is composed of a pure water ice slurry at 0°C, and that the system for producing/storing electrical energy (1; 100; 200; 300; 400; 500) further comprises a second circuitry of working fluid for circulating a second working fluid between the hot source (2) and a thermodynamic thermostat (7) constituted of a system at constant temperature adapted to exchange heat, wherein the second working fluid is circulated between said thermodynamic thermostat (7) and the hot source (2) by an auxiliary expansion valve (8) and an auxiliary compressor (9), and is caused to exchange heat therewith to maintain the hot source at 0°C.

2. - The system according to claim 1, **characterized by** the fact that a low temperature regenerator (12) is arranged to enable a heat exchange between the legs entering and exiting the cold source (3).

3. - The system according to one of claims 1 to 2, **characterized by** the fact that a high temperature regenerator (11) is arranged between the legs entering and exiting the second circulating member (5).

4. - The system according to one of claims 1 to 3, **characterized by** the fact that a superheating member (10) providing an external heat is provided on the first fluid circuitry immediately upstream of the inlet of the second circulating member (5) in its electricity production mode.

5. - The system according to one of claims 1 to 4, **characterized by** the fact that a compressor assembly (13) is provided on a fifth circuitry leg (4g) in parallel to the fourth leg (4cl; 4c2).

6. - The system according to one of claims 1 to 5, **characterized by** the fact that an expansion valve assembly (14) is provided on a sixth circuitry leg (4h) in parallel to the third leg (4d).

7. - The system according to claim 6 when dependent on claim 5, **characterized by** the fact that the fifth (4g) and sixth (4h) legs are directly connected to the first circuitry.

8. - The system according to claim 6 when dependent on claim 5, **characterized by** the fact that the fifth (4g) and sixth (4h) legs form with a seventh leg (4i) passing through the hot source (2) and an eighth leg (4j) passing through the cold source (3) a third closed circuitry independent from the first circuitry and parallel thereto, in which circulates a third working fluid.

9. - The system according to one of claims 1 to 4, **characterized by** the fact that it further comprises a source at an intermediate temperature (15) between the temperature of the hot source (2) and that of the cold source (3), a fourth fluid circuitry carrying a fourth working fluid comprising a leg passing through each of the sources to exchange heat with them, the intermediate temperature source (15) being connected to the fourth circuitry in parallel to the hot source (2), by a leg (4g1) equipped with a compressor (13a) and a leg (4h1) equipped with an expansion valve (14a), and in parallel to the cold source (3), by a leg (4g2) equipped with a compressor (13b) and a leg (4h2) equipped with an expansion valve (14b).

10. - The system according to claim 9, **characterized by** the fact that the intermediate temperature source (15) is made of an ice slurry at a temperature comprised between -15°C and -30°C, preferably -21°C.

11. - The system according to one of claims 9 and 10, **characterized by** the fact that the same working fluid circulates in the first circuitry and the fourth circuitry which form a single closed circuit.

12. - The system according to one of claims 9 and 10, **characterized by** the fact that the first circuitry and the fourth circuitry are independent.

13. - The system according to one of claims 1 to 12, **characterized by** the fact that the cold source (3) is made of an eutectic mixture of water and calcium chloride.

14. - The system according to one of claims 1 to 13, **characterized by** the fact that the first circuitry and the second circuitry are connected in a single closed circuitry, the first and second working fluids constituting a same and single working fluid for the assembly comprising the first and second circuitries.

15. - The system according to one of claims 5 to 14, **characterized by** the fact that at least one compressor of the compressor assembly (13) is equipped with a rotor provided with blades and is driven directly by the mechanical energy of the wind, or is equipped with a rotor driven by a pneumatic or hydraulic circuit actuated by a water-pumping windmill, the rotor being then indirectly driven by the mechanical energy of the wind.
